Europäisches Patentamt

European Patent Office

Office européen des brevets

(11) Publication number: **0 151 154**
**B1**

## (12) EUROPEAN PATENT SPECIFICATION

(45) Date of publication of patent specification: **11.01.89**

(51) Int. Cl.⁴: **B 62 D 53/08**

(21) Application number: **84902768.5**

(22) Date of filing: **12.07.84**

(86) International application number:
**PCT/AU84/00132**

(87) International publication number:
**WO 85/00331 31.01.85 Gazette 85/03**

(54) FIFTH WHEEL.

(30) Priority: **14.07.83 AU 278/83**

(43) Date of publication of application:
**14.08.85 Bulletin 85/33**

(45) Publication of the grant of the patent:
**11.01.89 Bulletin 89/02**

(84) Designated Contracting States:
**AT BE CH DE FR GB LI LU NL SE**

(56) References cited:
**AU-A-6 252 573**
**DE-A-1 755 502**
**DE-A-1 755 798**
**DE-A-2 542 328**
**DE-A-3 004 218**
**FR-A-1 235 509**
**FR-A-1 270 607**
**US-A-3 066 956**
**US-A-3 117 804**

(73) Proprietor: **HOLLAND HITCH (AUST.) LTD.**
**Western Highway**
**Melton, VIC 3337 (AU)**

(72) Inventor: **WILSON, James Allan**
**2 Manly Court**
**Bacchus Marsh, VIC 3340 (AU)**
Inventor: **ELLIS, James Randell**
**Merrimbula Boat Hire**
**Merrimbula, NSW 2548 (AU)**

(74) Representative: **Allden, Thomas Stanley et al**
**A.A. THORNTON & CO. Northumberland House**
**303-306 High Holborn**
**London WC1V 7LE (GB)**

Courier Press, Leamington Spa, England.

## Description

This invention relates to fifth wheel assemblies or turntables for articulated vehicles.

The height of the chassis for some makes of prime movers differs from other makes, whilst the height of trailers also varies. It is also common practice for prime movers to be coupled to a variety of trailers over a period of time in mixed fleet situations, rather than there being a continuing prime mover/trailer combination. With such operating requirements, the use of static fifth wheel assemblies will not ensure a relatively level load supporting surface on the trailer.

In FR—A—1270607, there is generally disclosed a fifth wheel assembly comprising a lower support structure adapted to be mounted on the chassis of a prime mover, an upper support plate upon which a trailer is to be supported, a linkage mechanism incorporated between the lower support structure and the upper support plate to raise and lower the upper support plate relative to the lower support structure, and means to hold the upper support plate relative to the lower support structure in one of at least two alternative positions.

More particularly, in the fifth wheel assembly of FR—A—1270607 the linkage mechanism comprises a pair of lever arms mounted at their lower ends upon a transverse shaft and bearing at their upper ends against the underside of the upper support plate. The shaft is mounted for rotation in the lower support structure and is caused to rotate, thereby rotating the lever arms so that their upper ends act to raise and lower the upper support plate depending on the sense of rotation, by operation of a pneumatic or hydraulic screw jack which results in angular displacement of an intermediate lever arm also fixed to the transverse shaft.

Whilst, therefore, the aforesaid particularly described fifth wheel assembly has a height adjusting capability often or desirably required in practice, it incorporates a costly hydraulic or pneumatic lifting mechanism. Moreover, the means serving to hold the upper support plate in an adjusted position are permanently incorporated in the assembly.

In accordance with the invention as claimed, the aforesaid generally disclosed fifth wheel assembly is characterised in that the linkage mechanism has a cam member eccentrically mounted for rotation about an axis extending transversely of the linkage mechanism with its peripheral surface engaging the lower support structure whereby, when rotated in one direction, the distance between the rotation axis and the point of engagement with the lower support structure progressively increases to extend the linkage mechanism, whereas, when rotated in the opposite direction, the said distance decreases to retract the linkage mechanism, such that the upper support plate is raised and lowered relative to the lower support structure, and wherein the means provided to hold the upper support plate relative to the lower support structure in said one of at least said two alternative positions are detachable.

The advantage of the invention is that it is less complex and, accordingly, less costly than the fifth wheel assembly of FR—A—1270607 whilst accomplishing the same functional result.

One embodiment of the invention, given by way of example, will now be described with reference to the accompanying drawings in which:

Figure 1 is a perspective view of a fifth wheel assembly embodying the invention;

Figure 2 is a side elevational view of the assembly of Figure 1 showing the assembly in its lowest height position;

Figure 3 is a side elevational view of the same assembly in one of a pair of intermediate height positions;

Figure 4 is a side elevational view of the same assembly in its highest height position; and

Figure 5 is a plan view of the same assembly.

A fifth wheel assembly, designated as 10, comprises a lower support structure 12 and an upper support structure plate 13 as are conventional for fifth wheel assemblies. Incorporated between the structure 12 and the support plate 13 is a linkage mechanism incorporating a pair of spaced apart main link assemblies 14 pivotally mounted at 19 on the support structure 12 and between a pair of upstanding support lugs 19a as shown. A pair of cam members 15 are eccentrically supported for rotation on each of the link assemblies 14 by pivot shafts 16 extending transversely through the link assemblies 14. The peripheral sufaces of the cam members 15 engage the lower support structure 12 such that when rotated by manually operable handles 17, fixed to the other ends of the pivot shafts 16, the distance between the rotation axis provided by the pivot shafts 16 and the point of engagement of those peripheral surfaces of the cam members with the lower support structure will progressively increase to extend the link assemblies or decrease to retract the link assemblies, depending on the sense of rotation of the cam members, such that the link assemblies will pivot up and down to raise and lower the support plate 13, to which portions 18b of the link assemblies toward the opposite ends thereof are pivotally connected at 18 between a pair of lugs 18a extending downwardly from beneath generally diametrically opposed edge portions of the support plate 13. As shown a common connecting bar 16a may be coupled between the cam members.

Detachable means are provided to hold the upper support plate 13 relative to the lower support structure 12 in one of at least two alternative positions. The detachable means include additional link assemblies 20, acting as struts, pivotally connected at 21 to the extreme ends of the link assemblies 14, or alternatively to said upper support plate, with the lower ends of the additional assemblies 20 interlocking in a number of positions with a pair of spaced apart locating bars 22 supported on the support structure 12 and having in this case three aligned pairs of holes 23, 24 and 25 therethrough adapted to align with one or the other of a pair of holes 26 and 27 in the additional link assemblies with a locating pin 28 with handle being inserted through the aligned holes for each location to hold the assembly at that location.

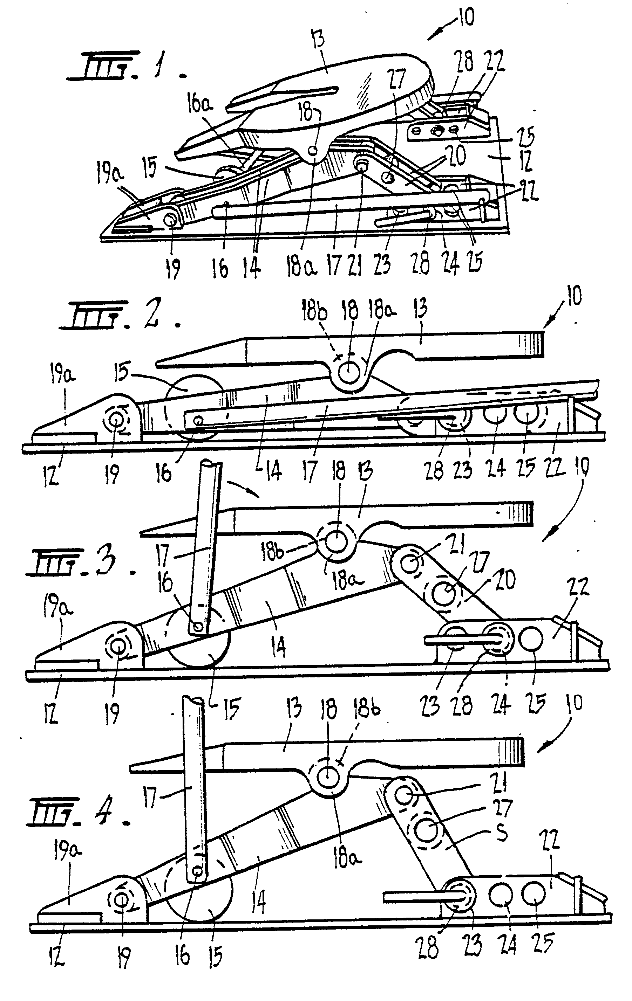

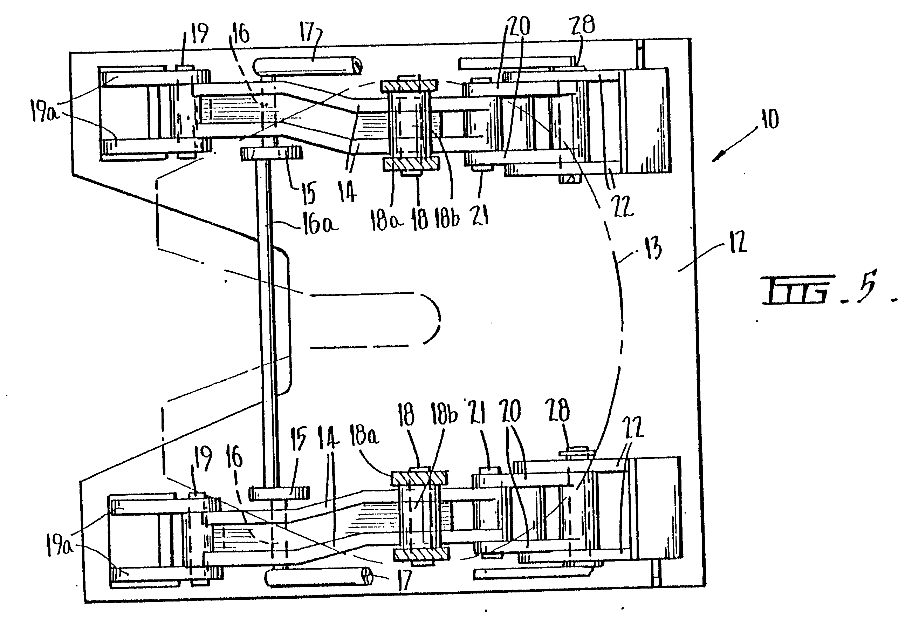

At the lowest height of the assembly for the fifth wheel and as shown in Figure 2, the holes 23 in the locating bar and the holes 27 in the link assemblies are aligned and the locating pins 28 inserted.

In a first elevated position (not shown), the holes 26 in the link assembly are aligned with the holes 25 in the locating bars, and locating pins 28 inserted.

In the second elevated position as shown in Figure 3, the holes 26 in the link assemblies are aligned with the holes 24 in the locating bars, and locating pins 28 inserted.

In the third or highest elevated position as shwown in Figure 4, the holes 26 in the link assemblies are aligned with the holes 23 in the locating bars, and locating pins 28 inserted.

At any position, after insertion of the locating pins 28, the cam member 15 and their handles 17 can be swung back down to the positions shown in Figures 1 and 2.

## Claims

1. A fifth wheel assembly comprising a lower support structure (12) adapted to be mounted on the chassis of a prime mover, an upper support plate (13) upon which a trailer is to be supported, a linkage mechanism (14, 15) incorporated between the lower support structure and the upper support plate, and means (20) to hold the upper support plate relative to the lower support structure in one of at least two alternative positions, characterised in that the linkage mechanism has a cam member (15) eccentrically mounted for rotation about an axis extending transversely of the linkage mechanism with its peripheral surface engaging the lower support structure whereby, when rotated in one direction, the distance between the rotation axis and the point of engagement with the lower support structure progressively increases to extend the linkage mechanism, whereas, when rotated in the opposite direction, the said distance decreases to retract the linkage mechanism, such that the support plate is raised and lowered relative to the lower support structure, and wherein the means (20) provided to hold the upper support plate relative to the lower support structure in said one of at least two alternative positions are detachable.

2. A fifth wheel assembly as claimed in claim 1, including a handle (17) for rotating the cam member (15) in said one and said opposite direction.

3. A fifth wheel assembly as claimed in claim 1 or claim 2, wherein the linkage mechanism (14, 15) includes a pair of spaced apart main link assemblies (14) pivotally attached at one end to the lower support structure (12) and pivotally attached adjacent their other ends to the upper support plate (13), the cam member (15) being pivotally supported on at least one of the link assemblies.

4. A fifth wheel assembly as claimed in claim 3, wherein the detachable means (20) includes a pair of spaced apart strut assemblies (20) pivotally connected at one end to respective ones of the main link assemblies (14), and detachably connected to the lower support structure (12) to hold the upper support plate relative to the lower support structure in said one of at least said two alternative positions.

5. A fifth wheel assembly as claimed in claim 4, wherein the strut assemblies (20) co-operate with locating members (28) supported on the lower support structure (12), holes (23, 24, 25) through the strut assemblies and the locating members being provided whereby upon alignment of selective holes and insertion of a locating member (28) the strut assemblies will hold the upper support plate (13) relative to the lower support structure in said one of at least said two alternative positions.

## Patentansprüche

1. Schleppersattelvorrichtung mit einer unteren Tragekonstruktion (12), die an das Chassis einer Zugmaschine anbringbar ist, mit einer oberen Trageplatte (13), auf der ein Anhänger tragbar ist, mit einem Gestängemechanismus (14, 15), der zwischen der unteren Tragekonstruktion und der oberen Trageplatte eingegliedert ist un mit Mittel (20) zum Halten der oberen Trageplatte relativ zur unteren Tragekonstruktion in einer von zumindest zwei verschiedenen Stellungen, dadurch gekennzeichnet, daß der Gestängemechanismus ein exzentrisch engebrachtes, um eine sich quer zum Gestängemechanismus erstreckende Achse drehbares Exzenterelement aufweist, dessen Umgangsfläche mit der unteren Tragekonstruktion in Eingriff steht, wobei, falls es in eine Richtung gedreht wird, sich der Abstand zwischen der Drehachse und dem Eingriffspunkt mit der unteren Tragekonstruktion andauernd vergrößert, wodurch der Gestängemechanismus ausgedehnt wird, wohingegen, falls es in die entgegengesetzte Richtung gedreht wird, der Abstand verringert wird, so daß der Gestängemechanismus zusammengezogen wird, und zwar derart, daß die obere Trageplatte relativ zur Tragekonstruktion angehoben und abgesenkt wird, und daß die Mittel zum Halten der oberen Trageplatte relativ zur unteren Tragelonstruktion in einer der zumindest zwei verschiedenen Stellungen lösbar sind.

2. Schleppersattelvorrichtung nach Anspruch 1, mit einer Handhabe (17) zum Drehen des Exzenterelements (15) in die eine und in die entgegengesetzte Richtung.

3. Schleppersattelvorrichtung nach Anspruch 1 oder 2, wobei der Gestängemechanismus (14, 15) ein Parr an voneinander beabstandeten Hauptgestängegliedern (14) aufweist, die an einem Ende Schwenkbar mit der unteren Tragekonstruktion (12) verbunden sind, und die benachbart zu ihrem anderen Ende sschwenkbar and der oberen Trageplatte (13) angebracht sind, wobei das Exzenterelement (15) von zumindest einem der Gestängeglieder drehbar getragen wird.

4. Schleppersattelvorrichtung nach Anspruch 3, bei der die lösbaren Mittel ein Paar an voneinander beabstandeten Strebegliedern (20) aufweisen, die en einem Ende schwenkbar jeweils mit einem entsprechenden Hauptgestängeglied (14) verbunden sind, und die lösbar mit der unteren Tragekonstruktion (12) verbunden sind, um die obere Trageplatte relativ zur unteren Tragekonstruktion in einer der zumindest zwei verschiedenen Stellungen zu halten.

5. Schleppersattelvorrichtung nach Anspruch 4, bei der die Sterbeglieder (20) mit Haltegliedern (28) zusammenwirken, ide von der unteren Tragekonstruktion (12) getragen werden, wobei Öffnungen (23, 24, 25) durch die Strebeglieder und die Halteglieder vorgesehen sind, wobei, falls ausgewählte Öffnungen in Ausrichtung stehen und ein Halteglied (28) eingeschoben nist, die Strebeglieder die obere Trageplatte (13) relativ zur unteren Tragekonstruktion in einer der zumindest zwei verschiedenen Stellungen halten.

## Revendications

1. Ensemble à plaque de pivotement comprenant une structure inférieure (12) de support destinée à étre montée sur le chassis d'un tracteur, une plaque supérieure (13) de support sur laquelle une remorque est destinée à être supportée, un mécanisme à tringlerie (14, 15) incorporé entre la structure inférieure et la plaque supérieure de support, et un dispositif (20) destiné à maintenir la plaque supérieure de support par rapport à la structure inférieure dans l'une d'au moins deux positions différentes, caractérisé en ce que le mécanisme à tringlerie a un organe de came (15) monté excentriquement afin qu'il tourne autour d'un axe disposé transversalement au mécanisme à tringlerie, sa surface périphérique étant au contact de la structure inférieure de support si bien que, lorsqu'il tourne dans un premier sens, la distance comprise entre l'axe de rotation et le point de contact avec la structure inférieure de support augmente progressivement et provenque un écartement du mécanisme à tringlerie alors que, lorsqu'il tourne en sens opposé, la distance diminue et provoque un pliage de mécanisme à tringlerie se bien que la plaque supérieure de support est soulevée et abaissée par rapport à la structure inférieure de support, et le dispositif (20) destiné à maintenir la plaque supérieure de support par rapport à la structure inférieure de support dans l'une d'au moins deux positions différentes est amovible.

2. Ensemble à plaque de pivotement selon la revendication 1, comprenant une poignée (17) destinée à faire tourner l'organe de came (15) dans le premier sens et dans la sens opposé.

3. Ensemble à plaque de pivotement selon la revendication 1 our 2, dans lequel le mecanisme à tringlerie (14, 15) comporte deux ensembles distants (14) à bielle principale articulés à une premiére extrémité sur la structure inférieure (12) de support et articulés, prés de leur autre extrémité, sur la plaque supérieure (13) de support, l'organe de came (15) étant supporté sous forme articulée sur l'un au moins des ensembles à bielle.

4. Ensemble à plaque de pivotement selon la revendication 3, caractérisé en ce que le dispositif amovible (20) comporte deux ensembles distants (20) à jambe de force articulés à une première extrémité sur un ensemble respectif à bielle principale (14), et articulés de façon amovible sur la structure inférieure (12) de support afin que la plaque supérieure de support soit maintenue dans l'une des differentes positions au nombre d'au moins deux par rapport à structure inférieure de support.

5. Ensemble à plaque de pivotement selon la revendication 4, dans lequel les ensembles (20) formant jambe de force coopérent avec des organes de positionnement (28) supportés par la structure inférieure (12) de support, des trous (23, 24, 25) traversant les ensembles à jambe de force et les organes de positionnement étant disposés de manière que, lorsque des trous choisis sont alignés et lorsqu'un organe de positionnement (28) a été introduit, les ensembles à jambe de force maintiennent la plaque supérieure (13) de support par rapport à la structure inférieure de support dans l'une des deux positions différentes au moins.

FIG. 1.

FIG. 2.

FIG. 3.

FIG. 4.

FIG.5.